# EUROPÄISCHE PATENTSCHRIFT

(11) **EP 2 562 485 B1**
(45) Veröffentlichungstag und Bekanntmachung des Hinweises auf die Patenterteilung: **07.10.2020**
(21) Anmeldenummer: 12181753.0
(22) Anmeldetag: 24.08.2012
(51) Int. Cl.: F24H 1/14, F24H 1/00, F24H 9/00, F28D 7/16, H05B 3/02, B60H 1/22, H05B 3/14, F28F 9/22, F28F 13/00, F28F 13/06, F28F 19/02, F28D 7/00, H05B 3/44

(54) **Medienheizer**
Media heater
Chauffage de milieux

(30) Priorität: 25.08.2011 DE 102011111606
(43) Veröffentlichungstag der Anmeldung: 27.02.2013
(73) Patentinhaber: HOMAG GmbH, 72296 Schopfloch (DE)
(72) Erfinder: Müller, Helmut, 74394 Hessigheim (DE); Giffels, Thomas, 70469 Stuttgart (DE)
(74) Vertreter: Grauel, Andreas

(56) Entgegenhaltungen:
- EP-A1- 2 015 017
- WO-A1-2004/065874
- WO-A1-2007/139328
- WO-A1-2011/086909
- DE-U1- 29 910 670
- DE-U1-202010 006 739
- US-A- 2 797 297
- US-A- 5 299 278
- US-A1- 2009 084 520

## Beschreibung

Die Erfindung betrifft einen Medienheizer zur Aufheizung von Druckluft als Medium.

Elektrisch betriebene Medienheizer werden zunehmend in Kraftfahrzeugen oder in Industrieanlagen eingesetzt, um beispielsweise das Kühlwasser vor Erreichen seiner Betriebstemperatur mittels elektrischer Energie aufzuheizen. Das so aufgeheizte Kühlwasser kann dann zur Erwärmung der Raumluft des Fahrgastraumes verwendet werden. Ebenso können verschiedene Aggregate des Kraftfahrzeuges, beispielsweise der Batteriepack eines Elektrofahrzeuges im Kaltstart oder im Winterbetrieb rasch auf ihre Betriebstemperatur gebracht werden.

Auch kann Luft oder Druckluft erwärmt werden, um in einem Produktionsprozess verwendet zu werden, um zu verarbeitende Elemente zu erwärmen. Beispielsweise kann ein aufzuklebendes Element mittels erwärmter Luft an einer Randschicht aufgeschmolzen werden, um es auf eine Oberfläche aufzukleben.

In der DE 10 2009 038 978 A1 ist ein Medienheizer beschrieben, bei dem Heizstäbe, die Heizelemente aus einer PTC-Keramik enthalten, an einem Gehäuseteil angebracht sind. Zwischen diesem Gehäuseteil und einem weiteren Gehäuseteil ist ein mäanderförmiger Kanal ausgebildet, durch den das aufzuheizende Medium, hier Wasser, strömt.

Nachteilig an dieser Bauart ist, dass dasjenige Gehäuseteil, an dem die Heizstäbe angebracht sind, zunächst aufgeheizt werden muss, bevor die Wärme auf das Medium übertragen wird.

Zusätzlich ergeben sich erhebliche thermische Verluste dadurch, dass die Heizstäbe Wärme gleichmäßig in alle Richtungen abgeben, so dass ein Großteil der Wärmeleistung nicht an das Medium, sondern an die Umgebung abgegeben wird. Hierdurch wird der Wirkungsgrad der Heizung erheblich beeinträchtigt. Der mäanderförmige Kanal mit relativ kleinem Querschnitt führt zudem zu einem hohen Strömungswiderstand für das Medium, was wiederum eine höhere Leistung der Zirkulationspumpe zur Förderung des Mediums durch den Heizer erforderlich macht. Außerdem hat der mäanderförmige Kanal noch den Effekt, dass die Temperatur des Mediums auf dem Weg durch den Heizer allmählich ansteigt und im Bereich derjenigen Heizstäbe, die sich kurz vor der Medienaustrittsöffnung befinden, ein deutlich verringerter Temperaturunterschied zum Heizelement besteht. Auf Grund der PTC-Eigenschaft der Heizelemente wird die Heizleistung in diesem Bereich reduziert, was wiederum zu einer Verschlechterung des Wirkungsgrades führt. Außerdem wird dadurch die Heizleistung unsymmetrisch verteilt.

In DE 20 2008 003 357 U1 ist ebenfalls ein Medienheizer beschrieben, bei dem in einem plattenförmigen Körper ein mäander- oder schneckenförmiger Kanal angeordnet ist und an dessen Außenseite elektrische Heizelemente angeordnet sind. Auch hier entstehen wesentliche thermische Verluste durch den dargestellten Aufbau, da sowohl die Heizelemente als auch der plattenförmige Körper Wärme an die Umgebung abgeben.

Auch in der Ausführung nach EP 0 899 985 B1 ist ein Medienheizer mit einem Medienkanal beschrieben, der einen sehr hohen Strömungswiderstand darstellt. Ebenso leiten die massiv ausgebildeten Heizkörper einen großen Teil der Wärmeenergie nicht an die Oberfläche des Medienkanals, sondern auch über die Oberfläche an die Umgebung ab. Dadurch entstehen ebenfalls hohe thermische Verluste.

Auch die US 2 797 297 und die US 5 299 278 offenbaren Medienheizer gemäß des Oberbegriffs von Anspruch 1.

Der Erfindung liegt dementsprechend die Aufgabe zu Grunde, einen Medienheizer der eingangs genannten Art, insbesondere für Kraftfahrzeuge oder Industrieanwendungen vorzusehen, bei dem die thermischen Verluste möglichst gering gehalten werden und damit der Wirkungsgrad erhöht ist. Außerdem kann es optional auch vorteilhaft sein, wenn der Medienheizer einen möglichst geringen Strömungswiderstand für das durch den Medienheizer durchströmende Medium besitzt.

Diese Aufgabe wird erfindungsgemäß mit einem Medienheizer gelöst, der die Merkmale des Anspruches 1 aufweist. Vorteilhafte Ausgestaltungen sind in den abhängigen Ansprüchen angegeben.

Ein Ausführungsbeispiel sieht einen Medienheizer zur Aufheizung fluider Medien vor, insbesondere in Kraftfahrzeugen oder Industrieanlagen, umfassend: ein Gehäuse, das einen Zufluss für den Eintritt des Mediums in das Gehäuse, einen Ausfluss für den Austritt des Mediums aus dem Gehäuse und Wände, die einen geschlossenen Innenraum festlegen, aufweist, und eine oder mehrere länglich ausgebildete Wärmequellen, die in dem Innenraum des Gehäuses angeordnet sind, wobei die Wände des Gehäuses und die Wärmequellen einen Medienkanal in dem Innenraum festlegen, entlang dessen das aufzuheizende Medium beim Betrieb des Medienheizers von dem Zufluss zu dem Abfluss fließt.

Vorteilhaft ist es, wenn die Wärmequelle durch ein elektrisch beheiztes Heizrohr gebildet wird. Dieses Heizrohr kann von außen durch die Wand des Gehäuses in den Innenraum ragen und derart das Medium aufheizen. Dadurch kann auch eine vereinfachte Konstruktion realisiert werden.

Auch ist es zweckmäßig, wenn die Beheizung der Wärmequelle über PTC-Elemente erfolgt. Alternativ kann ein Widerstandsheizelement vorgesehen werden.

Auch ist es zweckmäßig, wenn das Medium längs der Wärmequellen in einer dünnen Fließschicht geleitet wird. Auch kann das Medium im Wesentlichen quer zu den Wärmequellen geleitet werden.

Dabei kann es auch vorteilhaft sein, wenn das Medium im Wesentlichen nur in einer Richtung durch den Heizer fließt. Dies bedeutet, dass zwischen Zufluss und Abfluss keine Umlenkung liegt, weil sich Zufluss und Abfluss im Gehäuse im Wesentlichen gegenüber liegen bzw. an gegenüberliegenden Seitenwänden des Gehäuses angeordnet sind.

Auch ist es vorteilhaft, wenn beim Medienzufluss und/oder am Medienabfluss ein Sammelvolumen vorgesehen ist. Dadurch kann noch einmal eine bessere Durchmischung erfolgen und eine Vergleichmäßigung der Temperatur des Mediums erfolgen.

Weiterhin ist es zweckmäßig, wenn der Medienzufluss über die Außenoberfläche des Heizers geleitet wird, um dort Verlustwärme aufzunehmen

Auch ist es vorteilhaft, wenn die Oberfläche des durchfließenden Volumens zumindest teilweise vorzugsweise an der Oberfläche der Wärmequelle mit Oberflächenstrukturen versehen ist, um das Fließverhalten zu beeinflussen. Dazu können Rippen vorgesehen sein.

Alternativ kann das Volumen auch mit einem offenporigen Metallschaum oder mit einer Metallwolle oder einem ähnlichen Material belegt bzw. ausgefüllt sein, so dass das Medium durch dieses oberflächenvergrößernde Material durchströmt und sich dabei bereits auf kurzem Strömungsweg erwärmt. Dabei ist dieses oberflächenvergrößernde Material mit den Heizelementen durchsetzt, die es erwärmt.

Auch kann die Oberflächenstruktur alternativ oder zusätzlich durch Rippen und/oder Leitbleche gebildet werden.

Auch ist es vorteilhaft, wenn die Oberflächenstruktur durch eine Mikrostruktur gebildet wird. Diese kann dabei vorteilhaft durch einen Sintermaterialblock aus Metall oder Keramik, ein offenporiges Kunststoffteil, ein Graphitelement mit Durchgangskanälen, ein Metallschaum, eine Metallwolle, oder ein gut wärmeleitendes Material mit Kanälen oder ähnliches gebildet sein. Bei Verwendung von Sintermaterial kann ein gut wärmeleitendes Material, wie Keramik oder Metall als kleine Kugeln oder Körner verpresst werden, um ein offenporiges Material zu erhalten. Dabei kann zumindest ein gesinterter Block oder zumindest eine gesinterte Platte in das Gehäuse aufgenommen werden, in welche die Wärmequellen bzw. Heizrohre in Öffnungen oder Bohrungen eingeschoben werden.

Auch ist es zweckmäßig, wenn die Oberfläche des durchfließenden Volumens zumindest teilweise, vorzugsweise an der Oberfläche der Wärmequelle, mit einer Oberflächenbeschichtung versehen ist.

Alternativ oder zusätzlich kann die Oberfläche des Gehäuses mit einer thermischen Isolierung versehen sein. Dabei ist bevorzugt die Innen- oder Außenseite der Oberfläche mit einer thermischen Isolierung versehen, um die Wärmeverluste möglichst zu reduzieren. Dies wirkt sich besonders positiv auf die Energiebilanz der Vorrichtung aus.

Dabei ist es zweckmäßig, wenn sich in Durchflussrichtung des Mediums mindestens eine Aufheizzone und mindestens eine Mischzone befindet.

Weiterhin ist es zweckmäßig, wenn das Gehäuse des Heizers und die Wärmequellen im Wesentlichen einstückig z.B. als Stranggussteil herstellbar sind. Alternativ können das Gehäuse und die Wärmequellen auch separat gefertigt werden und die Wärmequellen können durch Öffnungen im Gehäuse in den Innenraum eingeschoben und am Gehäuse fixiert werden. Durch diese Fixierung kann auch gleichzeitig eine Abdichtung vorgenommen sein. So können die Wärmequellen beispielsweise mit dem Gehäuse verschweißt, verklebt oder verlötet sein. Auch können die Wärmequellen mittels einer formschlüssigen Verbindung mit dem Gehäuse verbunden sein, wie verschraubt oder verriegelt sein.

Auch ist es vorteilhaft, wenn die Wärmequellen aus standardisierten Heizrohren bestehen, die im Baukastensystem in das Heizergehäuse eingebaut werden. Dadurch kann eine Kostenreduktion durch Verwendung standardisierter Bauteile erreicht werden.

Auch ist es zweckmäßig, wenn die Spaltdicke im Heizbereich zwischen 1 mm und 8 mm beträgt. Bei Metallschäumen oder Metallwolle oder ähnlichem kann die Porengröße auch geringer sein als 1 mm bis 8 mm.

Dabei ist es besonders zweckmäßig, wenn die Spaltdicke oder Porengröße im Heizbereich zwischen 0,1 bis 1 mm und 5 mm beträgt.

Der Medienheizer bietet einen hohen Wirkungsgrad bei geringem Strömungswiderstand und einer einfachen Herstellungsart, die für die Großserienfertigung geeignet ist.

Die Erfindung wird im Folgenden beispielhaft anhand von Ausführungsbeispielen näher erläutert.

In den zugehörigen Zeichnungen zeigen:
Fig. 1 einen Schnitt durch einen nicht erfindungsgemäßen Heizer mit Längsdurchströmung;
Fig. 2 einen Schnitt durch einen erfindungsgemäßen Heizer mit Außendurchströmung;
Fig. 3 einen Schnitt durch einen nicht erfindungsgemäßen Heizer mit Querdurchströmung, und
Fig. 4 einen Schnitt durch einen nicht erfindungsgemäßen Heizer mit rippenförmiger Oberflächenstruktur.

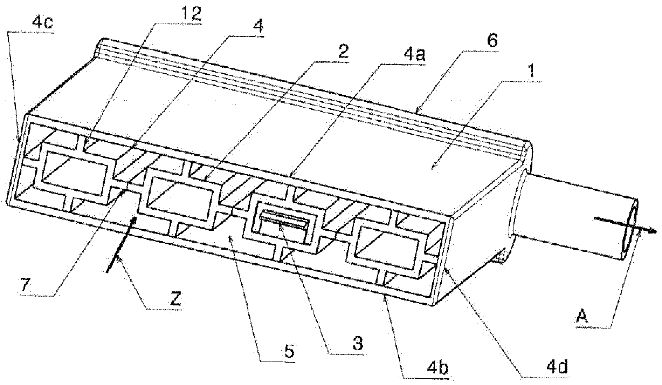

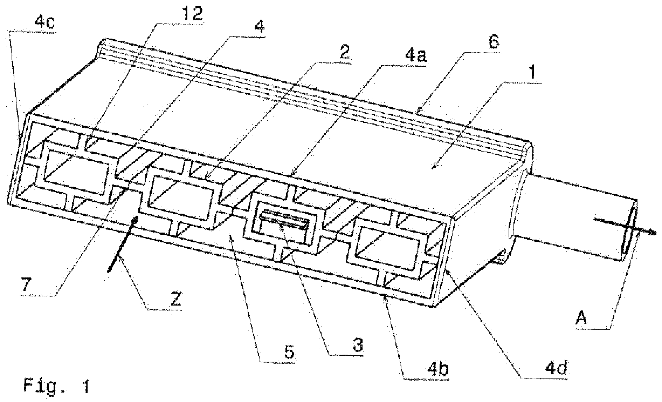

In Figur 1 ist ein Beispiel eines nicht erfindungsgemäßen Heizers 1 im Schnitt dargestellt. Der Heizer weist eine oder mehrere Wärmequellen auf, die hier als Heizstäbe bzw. Heizrohre 2 dargestellt sind. Wenngleich diese Wärmequellen in Figur 1 als Rechteckrohr dargestellt sind, sind ebenso andere Rohrquerschnitte denkbar, beispielsweise Rohre mit rundem, kreisrundem, elliptischem, polygonalem Querschnitt.

Die Anzahl der in dem Heizer 1 vorgesehenen Heizrohre 2 ist nicht auf die in Figur 1 gezeigte Anzahl beschränkt, sondern bemisst sich nach den Abmessungen des Heizers und der Heizleistung, die durch diesen zur Verfügung gestellt werden soll. Die Heizrohre erstrecken sich durch den gesamten Gehäuseinnenraum bis zur gegenüberliegenden Seite des Heizers.

Des Weiteren müssen nicht sämtliche Rohre denselben Querschnitt aufweisen. So ist es beispielsweise denkbar, dass die in der Nähe des Zuflusses Z vorgesehenen Rohre einen Querschnitt aufweisen, der sich von dem Querschnitt derjenigen Rohre unterscheidet, die sich in der Nähe des Abflusses A befinden. Der jeweils gewählte Querschnitt kann dabei in Abhängigkeit von dem gewünschten Wärmeübertrag von den Rohren auf das Medium gewählt werden.

Im Inneren der Rohre 2 sind jeweils Heizelemente, z.B. PTC-Elemente 3 oder Widerstandsheizelemente, in an sich bekannter Weise eingebracht, die über eine nicht dargestellte elektrische Kontaktierung mit Spannung versorgt werden und dadurch das Heizrohr erwärmen. Die Heizelemente 3 stehen dazu in einem guten, möglichst großflächigen thermischen Kontakt mit dem Heizrohr 2.

Das Gehäuse des Heizers 1 weist im dargestellten Ausführungsbeispiel einen rechteckigen Querschnitt auf. Es wird von jeweils zwei parallel und in einem Abstand zueinander verlaufenden Außenwandungen 4a, 4b und 4c, 4d gebildet. Zwischen den im Innern des Gehäuses 1 angeordneten Heizrohren 2 und den Außenwandungen 4a, 4b, 4c, 4d sind Zwischenräume 5 vorgesehen, durch die das zu beheizende Medium fließt. Ebenso sind die Heizrohre 2 beabstandet zueinander angeordnet. Auch durch diesen Abstand wird ein Zwischenraum gebildet, durch den Medium strömt.

Das Gehäuse 1 weist ferner einen nicht dargestellten Zufluss Z und einen Abfluss A auf. Der Zufluss Z befindet sich an einem Ende der Heizrohre, während der Abfluss an einem gegenüberliegenden Ende der Heizrohre angeordnet ist. Das Medium strömt durch den Innenraum des Heizers, und zwar in Pfeilrichtung Z entlang den Heizrohren 2 zum Abfluss A.

Alternativ dazu können die Heizrohre auch quer zur Strömungsrichtung des Mediums orientiert sein, so dass der Zufluss Z und der Abfluss A in gegenüberliegenden Außenwandungen angeordnet sind, die Heizrohre jedoch zwischen zwei dazu senkrecht angeordneten weiteren Außenwandungen angeordnet sind.

Die Geometrie sämtlicher Zwischenräume 5 ist optional derart gewählt, dass der Strömungsquerschnitt, d.h. die Fläche, durch die das Medium nach Eintritt durch den Zufluss Z tritt, in etwa dem Querschnitt der Zuleitungen vor dem Zufluss Z entspricht, vorzugsweise sogar größer als dieser ist, um den Durchflusswiderstand des Heizers möglichst gering zu halten.

Um eine möglichst gute Wärmeübertragung auf das Medium zu erreichen, werden die Heizrohre 2 vom Medium möglichst großflächig umspült. Der Spalt, der sich zwischen der Heizrohrwand und der jeweils benachbarten Gehäusewandung 4a, 4b, 4c, 4d befindet, und durch den das Medium um die Heizrohre 2 fließt, liegt in einem Bereich zwischen 0,5 mm und 8 mm, vorzugsweise 0,5 mm und 5 mm. Eine derart gewählte Spaltbreite ermöglicht zum einen eine kompakte Bauweise des gesamten Heizers, zum anderen einen guten Wärmeübertrag zwischen Heizrohr und Medium, da durch die Spaltbreite und die dadurch bestimmte Fließgeschwindigkeit eine hinreichend lange Verweildauer des Mediums im Bereich des Heizrohres gegeben ist.

Zur Vergrößerung der Heizeroberfläche sind vorzugsweise Längsrippen, nicht in Figur 1 gezeigt, an den Heizrohren 2 vorgesehen, deren Höhe bzw. Oberfläche entsprechend der Wärmeverteilung auf der Oberfläche der Heizrohre 2 angepasst ist, d.h. es können an den vier Flachseiten und in Längsrichtung der Heizrohre verlaufende Rippen vorgesehen sein, deren Höhe symmetrisch von der Mitte nach außen hin abnimmt.

Es ist auch möglich, durch andere Oberflächenstrukturen, wie Rillen, Aufrauhungen, Mikrostrukturen die Oberfläche zu vergrößern. Diese Oberflächenstrukturen und/oder Rippen sind vorzugsweise thermisch leitend mit den Heizrohren verbunden, und/oder sind an den Wandungen 4a, 4b, 4c, 4d vorgesehen. Derartige Rippen haben zudem die Aufgabe, das fließende Medium zu leiten, dadurch kann der Fließweg beeinflusst werden.

Alternativ dazu kann in den Innenraum des Heizers auch ein Sintermaterialblock aus Metall oder Keramik, ein offenporiges Kunststoffteil, ein Graphitelement mit Durchgangskanälen, ein Metallschaum, eine Metallwolle, oder ein gut wärmeleitendes Material mit Kanälen oder ähnliches als Mikrostrukturen und als Oberflächenvergrößerung eingebracht sein, um den Wärmeübergang zwischen den Heizrohren und dem Medium zu verbessern. Dabei kann das oberflächenvergrößernde Material derart eingebracht sein, dass die Heizrohre dieses Material durch Öffnungen durchquert.

Die Heizrohre 2 können mittels Stützrippen 12 an den Wandungen 4a, 4b, 4c, 4d und/oder mittels Stützrippen 7 am benachbarten Heizrohr abgestützt sein. Die Stützrippen 7, 12 verlaufen in Längsrichtung der Heizrohre und sind bei 3, 6, 9 und/oder 12 Uhr an den Heizrohren vorgesehen.

Die Heizrohre können auch einstückig mit den Wandungen 4a, 4b, 4c, 4d, z.B. als Strangpressteil hergestellt sein. Es ist aber auch ein modularer Aufbau denkbar, bei dem einzelne Heizrohre in ein Gehäuse eingeschoben werden. So können die Heizrohre von außen durch Öffnungen im Gehäuse eingeschoben werden. Idealer Weise sind die Heizrohre in den Öffnungen befestigt und abgedichtet. So kann das Hüllrohr der Heizrohre mit der Außenwandung des Gehäuses verbunden sein, so dass eine Befestigung und gleichzeitig eine Abdichtung erfolgt. Vorzugsweise erfolgt dies durch Schweißen, Löten oder Kleben.

Am Flüssigkeitseintritt Z bzw. -austritt A ist jeweils ein Sammelvolumen 6 für das Medium vorgesehen. Dieses Sammelvolumen hilft dabei, das Medium gleichmäßig über den gesamten Heizerquerschnitt zu verteilen.

Als Heizelemente werden üblicherweise PTC-Heizelemente verwendet, die auf bekannte Weise durch Einschieben der Heizelemente in das Heizrohr mit entsprechender elektr. Isolierung und Kontaktierung montiert werden. Zur besseren thermischen und elektrischen Kontaktierung können die Heizelemente verpresst werden.

Dabei können entlang den Stütz- oder Kühlrippen Presskräfte aufgebracht werden, die das Heizrohr verformen und die Heizelemente unter Vorspannung halten. Es sind auch andere Fertigungsverfahren, wie z.B. Aufschrumpfen bekannt, um die PTC-Elemente fest in das Heizrohr zu verbauen.

Die elektrischen Anschlüsse der Heizrohre werden an mindestens einer Seite des Heizers zur Stromversorgung herausgeführt.

Bei einer Anwendung als Wärmetauscher für einen Wärmetausch zwischen zwei Medien werden die Heizrohre mit dem heißen Medium durchströmt und geben die Wärme über die Rohrwandung ab. Auch werden die Heizrohre von einem kälteren Medium umströmt, um die Wärme aufnehmen zu können. An den jeweils gegenüberliegenden Enden des Heizers sind die Heizrohre mit dem Zufluss bzw. dem Abfluss des heißen Mediums verbunden. Es ist auch möglich, dass die Heizrohre untereinander wechselseitig verbunden sind und sich so ein mäanderförmiger Durchfluss des Heizmediums ergibt.

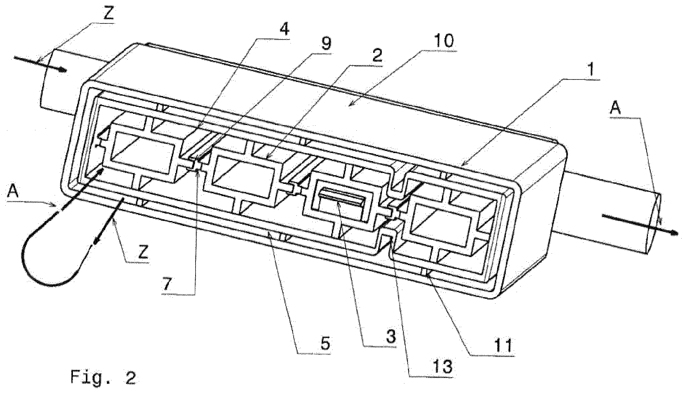

Figur 2 zeigt eine Variante des in Figur 1 dargestellten Heizers. Bei dieser Variante sind der Zufluss Z und der Abfluss A des Mediums auf derselben Heizerseite. Verbindet man Zufluss Z und Abfluss A durch eine hypothetische Linie, würde diese senkrecht zur Längserstreckung der Heizrohre 2 verlaufen.

Im Unterschied zu der in Figur 1 gezeigten Ausführungsform ist ein äußeres Gehäuse 10 vorgesehen, das in Umfangsrichtung einen gleichmäßigen Abstand zu dem in Figur 1 gezeigten Gehäuse 4 einnimmt, das bei dieser Variante als ein inneres Gehäuse bezeichnet werden kann. Beide Gehäuse sind mit Ausnahme des Zuflusses Z am äußeren Gehäuse 10 und des Abflusses A am inneren Gehäuse 4 geschlossen.

Das Medium fließt im Innern des Heizers zwischen den beiden Gehäusen und an der Außenseite der Wandung 4, kehrt seine Fließrichtung an dem in Figur 2 nicht gezeigten Ende der Heizrohre 2 um und umströmt die Heizrohre auf seinem Weg zum Abfluss A. Dies bringt den Vorteil, dass das Medium vor dem Umströmen der Heizrohre Energie von der möglicherweise aufgewärmten Wandung 4 aufnehmen kann und dadurch vorgewärmt wird.

Um dem Medium möglichst wenig Wärme zu entziehen, ist das äußere Gehäuse 10 aus einem schlecht wärmeleitenden Material hergestellt, z.B. aus Kunststoff.

Das Gehäuse 10 kann wiederum Innenrippen 11 aufweisen, die einerseits das innere Gehäuse abstützen und andererseits das fließende Medium führen. Die Rippen 11 sind vorzugsweise versetzt zu den Stützrippen 7, 12 angeordnet, um so Wärmebrücken zu vermeiden. Die Rippen 11 sind bevorzugt auch aus einem anderen Material als die Stützrippen 7, 12 hergestellt.

Die Außenwand 4 kann zwischen zwei benachbarten Heizrohren Stege oder Einschnürungen 13 aufweisen, die bewirken, dass der Strömungsquerschnitt des Heizers zwischen innerem Gehäuse 4 und äußerem Gehäuse 10 in etwa dem Strömungsquerschnitt innerhalb des inneren Gehäuses 4 entspricht. Insbesondere bewirken diese Einschnürungen auch eine gleichmäßige Spaltbreite durch den das Medium die Heizstäbe umströmt.

Zur vereinfachten Montage der Heizrohre im Heizer ist es vorteilhaft, wenn an das Heizrohr Längsführungen 9 angeformt sind, die jeweils zwei benachbarte Heizrohre stützen bzw. ausrichten. Sind die Führungen so gestaltet, dass die Heizstäbe selbsthemmend zusammenhalten z.B. durch einen Hinterschnitt oder eine Verpressung, dann kann die erforderliche Anzahl von Heizrohren als eine Baueinheit vormontiert und darin als gesamte Baugruppe in den Heizer eingebaut werden, was wiederum die Handhabung bei der Montage vereinfacht.

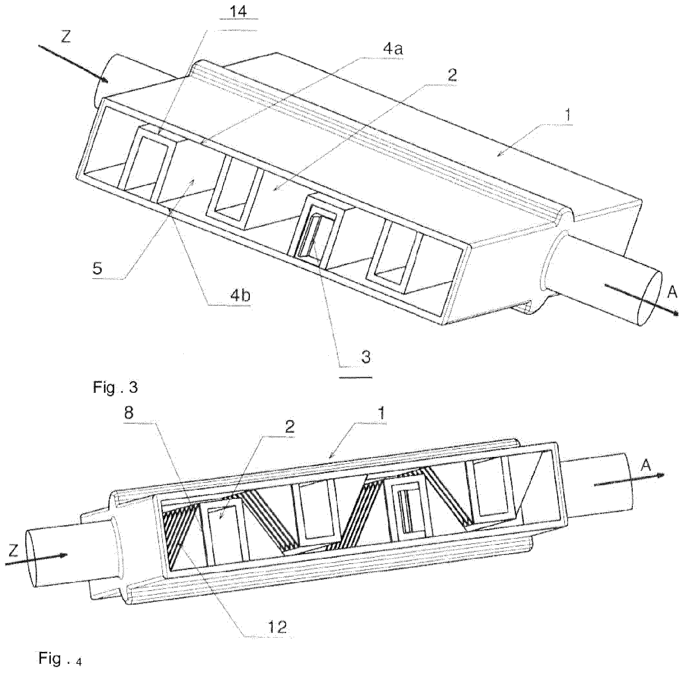

In Figur 3 ist ein Teil eines weiteren Ausführungsbeispieles eines Heizers 1 im Schnitt dargestellt. Der Heizer besteht aus einem oder mehreren Wärmequellen 2, die im Wesentlichen rohrförmig sind, in diesem Beispiel als Rechteckrohr. Die Wärmequellen erstrecken sich über die gesamte oder nahezu die gesamte Länge des Heizerinnenraumes. Im Inneren des Rohres sind Heizelemente z.B. PTC-Elemente 3 eingebracht, die über nicht dargestellte elektrische Kontaktierung mit Spannung versorgt werden und dadurch das Heizrohr erwärmen. Die Heizelemente stehen dazu in einem guten, möglichst großflächigen thermischen Kontakt mit dem Heizrohr.

Zwischen den Heizrohren 2 und der Außenwandung 4 sind Zwischenräume oder Spalte 5, 1 vorgesehen, durch die das zu beheizende Medium fließt. Das Medium fließt dabei an einem Zuflußstutzen Z in den Heizerinnenraum und fließt quer zu den Heizrohren zum Abflussstutzen A. Der Spalt 14 ist optional so gestaltet, dass der Gesamtquerschnitt in etwa dem Querschnitt der Zuleitungen entspricht, vorzugsweise aber größer als dieser ist, um den Durchflusswiderstand des Heizers möglichst gering zu halten. Die Spaltdicke ist hier vorzugsweise kleiner als 5 mm bevorzugt 0,5 bis 2 mm.

Um trotzdem eine möglichst gute Wärmeübertragung auf das Medium zu erreichen soll dieses möglichst großflächig die Heizrohre 2 umspülen.

In dem Zwischenraum 5 ist der Querschnitt in Fließrichtung deutlich größer als im Spalt 14, dadurch verringert sich dort die Fließgeschwindigkeit und es entsteht ggf. eine Durchmischung des Mediums. In diesem Bereich ist die Wärmeabgabe des Heizrohres üblicherweise größer als an der Schmalseite, so dass dadurch eine gute Kühlung der Heizelemente durch das durchmischte Medium gegeben ist. Die PTC-Elemente werden also gut gekühlt und dadurch wird die Heizleistung erhöht. Es können im Heizer mehrere solche Mischzonen sich mit Heizzonen abwechseln, um eine gleichmäßige Erwärmung des Mediums zu erreichen. Durch den Übergang der Querschnitte an einer Kante wird die Verwirbelung und Durchmischung des Mediums im Raum 5 begünstigt. Bevorzugt werden solche Mischzonen in einem Bereich angeordnet, in dem nicht oder nur mit geringerer Intensität eine Wärmeübertragung zum Medium stattfindet.

Die Heizrohre können auch einstückig mit den Außenwänden z.B. als Strangpressteil hergestellt sein, es ist aber auch ein modularer Aufbau denkbar, bei dem einzelne Heizrohre in ein Gehäuse eingeschoben werden.

Vorteilhafterweise sind die Heizrohre abwechselnd an den Heizerwänden 4a und 4b angeordnet oder direkt mit den Wänden verbunden, dadurch wird das Medium schlangenlinienförmig durch den Heizer geleitet. Dabei wird das Heizrohr an einer Seite mit dem Gehäuse verbunden, an der die Wärmeabgabe möglichst gering ist.

Am Flüssigkeitseintritt Z bzw. -austritt A ist vorzugsweise ein Sammelvolumen für das Medium vorgesehen. Dieses Sammelvolumen verteilt das zufließende Medium gleichmäßig über den gesamten Heizerquerschnitt.

Als Heizelemente werden üblicherweise PTC-Heizelemente verwendet, die auf bekannte Weise durch Einschieben der Heizelemente in das Heizrohr mit entsprechender elektr. Isolierung und Kontaktierung montiert werden. Zur besseren thermischen und elektrischen Kontaktierung können die Heizelemente verpresst werden.

Die elektrischen Anschlüsse werden an mindestens einer Seite des Heizers zur Stromversorgung herausgeführt.

Bei einem Anwendungsfall als Wärmetauscher werden die Heizrohre mit dem heißen Medium durchströmt und geben die Wärme über die Rohrwandung entsprechend ab. An den jeweils gegenüberliegenden Enden des Heizers sind die Heizrohre mit dem Zufluss bzw. dem Abfluss des heißen Mediums verbunden. Es ist auch möglich, dass die Heizrohre untereinander wechselseitig verbunden sind und sich so ein mäanderförmiger Durchfluss des Heizmediums ergibt.

Es ist auch möglich, dass der Zufluss und Abfluss auf derselben Seite des Heizers vorgesehen sind und der Zufluss über die Außenwände 4a, 4b, 4c und 4d in einem abgedichteten Gehäuse geführt wird und somit bereits evtl. Verlustwärme aufnehmen kann.

Figur 4 zeigt ein weiteres Ausführungsbeispiel eines Heizers nach Fig. 1, bei dem an den Heizflächen 8 des Heizrohres 2 noch Rippen 12 angeformt sind. Diese Rippen vergrößern die Wärmetauscherfläche und Verbessern dadurch den Wärmeübergang und außerdem bewirken Sie eine gleichmäßige Durchströmung des Heizers, so dass die Heizenergie gleichförmig und optimiert an das Medium übertragen wird.

Die Rippen 12 können so geformt sein, dass sich die Heizrohre daran gegenseitig im Gehäuse abstützen oder ausrichten. Sind die Führungen auch mit einem Hinterschnitt versehen, dann kann die erforderliche Anzahl von Heizstäben als eine Baueinheit montiert und dann als gesamte Baugruppe in den Heizer eingebaut werden, was wiederum die Handhabung bei der Montage vereinfacht. Die Rippen können zusätzlich auch zur Strömungslenkung des Mediums dienen, so dass das Medium gezielt an die gesamte beheizte Oberfläche des Heizstabes vorbeigeführt wird.

Die Rippen 12 können einstückig mit den Heizrohren verbunden sein, können aber auch als zusätzliches Bauteil z.B. auf die Heizrohre aufgesteckt werden.

Alternativ dazu kann ein Metallschaum oder eine Metallwolle oder ähnliches als offenporiges Material zur Oberflächenvergrößerung vorgesehen sein, welches von dem Medium um- und/oder durchströmt wird.

Der Heizer wird konstruktiv so ausgelegt, dass das Medium einerseits eine genügend lange Verweildauer aufweist um die Wärme der Heizelemente aufzunehmen, andrerseits die Fließgeschwindigkeit hoch genug ist um Ablagerungen in den Kanälen zu vermeiden und die Bildung von Dampfblasen bei flüssigem Medium durch lokale Temperaturüberhöhungen zu verhindern. Um Ablagerungen und Verschmutzungen im Heizer zu vermeiden, die die engen Spalte zusetzen könnten, ist es vorteilhaft, wenn die Oberflächen mit einer Antihaftschicht beschichtet sind. Dies kann z.B. eine Lackschicht oder ein Teflonüberzug, aber auch eine katalytische Beschichtung sein. Bei der Verwendung von aggressiven Medien kann die Schutzschicht z.B. auch aus einem Nitrid, Karbid, Aluminiumoxid oder Boroxid oder eher Mischung dieser Werkstoffe sein, um die Lebensdauer zu erhöhen.

Durch die unmittelbare Nähe des Mediums zu den PTC-Heizelementen werden die PTC-Elemente je nach erreichtem Temperaturniveau des Mediums mehr oder weniger gekühlt und die Heizleistung entsprechend der Temperaturdifferenz geregelt. Durch den modularen Aufbau ist es auch möglich in Fließrichtung Heizstäbe unterschiedlicher Temperatur- und Leistungsklassen einzubauen.

Erfindungsgemäß ist die Verwendung einer thermischen Isolierung um das Gehäuse des Medienheizers, damit die aufgebrachte Energie möglichst günstig zum Beheizen des Mediums und nicht zum Beheizen des Außenraums genutzt wird. Daher ist es zweckmäßig, wenn das Gehäuse mit einer thermischen Isolierung umgeben ist, die vorzugsweise das Gehäuse des Medienheizers im Wesentlichen vollständig umgibt.

Bei Verwendung von Luft oder Druckluft als zu erwärmendes Medium ist es zweckmäßig, wenn diese im Druckbereich von 1 bis 5 bar den Medienheizer verlässt. Vorzugsweise werden dabei Lufttemperaturen im Bereich von etwa 200 bis 400°C erzielt. Um die dazu notwendigen Energiemengen begrenzen zu können ist eine thermische Isolierung des Heizergehäuses vorteilhaft.

Um die Luftversorgung zu gewährleisten, ist der Medienheizer an eine Druckluftleitung anschließbar, die mittels eines elektrisch steuerbaren Ventils geöffnet und geschlossen werden kann, um auch getaktet eine erwärmte Druckluft zur Verfügung stellen zu können. Dabei ist das Ventil entweder direkt an dem Medienheizer angeordnet oder aus thermischen Gründen vom Medienheizer beabstandet in der Zuluftleitung angeordnet.

### Bezugszeichenliste

- 1: Heizer
- 2: Wärmequelle / Heizrohr
- 3: PTC-Heizelemente
- 4: Außenwandung
- 4a: Außenwandung
- 4b: Außenwandung
- 4c: Außenwandung
- 4d: Außenwandung
- 5: Zwischenraum
- 6: Sammelvolumen
- 7: Stützrippen
- 8: Heizrohrwand
- 9: Führung
- 10: Gehäuse
- 11: Gehäuserippen
- 12: Wärmeübertragungsrippen
- 13: Einschnürungen
- 14: Spalt
- A: Abfluss
- Z: Zufluss

## Patentansprüche

1. Medienheizer (1) zur Aufheizung von Druckluft als Medium, insbesondere in Kraftfahrzeugen oder Industrieanwendungen, umfassend: ein Gehäuse, das einen Zufluss (Z) für den Eintritt der Druckluft in das Gehäuse, einen Ausfluss (A) für den Austritt der Druckluft aus dem Gehäuse und Wände (4a, 4b, 4c, 4d), die einen geschlossenen Innenraum festlegen, aufweist, und eine oder mehrere länglich ausgebildete Wärmequellen (2), die in dem Innenraum des Gehäuses angeordnet sind, wobei die Wände des Gehäuses und die Wärmequellen (2) einen Medienkanal in dem Innenraum festlegen, entlang dessen die aufzuheizende Druckluft beim Betrieb des Medienheizers (1) von dem Zufluss (Z) zu dem Abfluss (A) fließt, wobei eine thermische Isolierung um das Gehäuse vorgesehen ist, welche das Gehäuse vollständig umgibt, wobei das Gehäuse ein äußeres Gehäuse (10) und ein inneres Gehäuse (4) ausbildet, **dadurch gekennzeichnet, dass** die beiden Gehäuse (4, 10) mit Ausnahme des Zuflusses (Z) am äußeren Gehäuse (10) und des Abflusses (A) am inneren Gehäuse (4) geschlossen sind und das Medium im Inneren des Heizers (1) zwischen den beiden Gehäusen (4, 10) und an der Außenseite des inneren Gehäuses (4) fließt und seine Fließrichtung an dem Ende der als Heizrohre (2) ausgebildeten Wärmequellen (2) umkehrt und die Heizrohre auf dem Weg zum Abfluss (A) umströmt.

2. Medienheizer (1) nach Anspruch 1, **dadurch gekennzeichnet, dass** die Wärmequelle (2) durch ein elektrisch beheiztes Heizrohr gebildet wird.

3. Medienheizer (1) nach Anspruch 1 oder 2, **dadurch gekennzeichnet, dass** die Beheizung der Wärmequelle (2) über PTC-Elemente (3) erfolgt.

4. Medienheizer (1) nach einem der Ansprüche 1 bis 3, **dadurch gekennzeichnet, dass** die Druckluft längs der Wärmequellen (2) in einer dünnen Fließschicht geleitet wird.

5. Medienheizer (1) nach einem der Ansprüche 1 bis 3, **dadurch gekennzeichnet, dass** die Druckluft im Wesentlichen quer zu den Wärmequellen (2) fließt.

6. Medienheizer (1) nach einem der Ansprüche 1 bis 5, **dadurch gekennzeichnet, dass** die Druckluft im Wesentlichen nur in einer Richtung durch den Heizer (1) fließt.

7. Medienheizer (1) nach einem der Ansprüche 1 bis 6, **dadurch gekennzeichnet, dass** beim Medienzufluss (Z) und/oder am Medienabfluss (A) ein Sammelvolumen vorgesehen ist.

8. Medienheizer (1) nach einem der Ansprüche 1 bis 7, **dadurch gekennzeichnet, dass** der Medienzufluss (Z) über die Außenoberfläche des Heizers (1) geleitet wird um dort Verlustwärme aufzunehmen.

9. Medienheizer (1) nach einem der Ansprüche 1 bis 8, **dadurch gekennzeichnet, dass** die Oberfläche des durchfließenden Volumens zumindest teilweise, vorzugsweise an der Oberfläche der Wärmequelle (2), mit Oberflächenstrukturen versehen ist, um das Fließverhalten zu beeinflussen.

10. Medienheizer (1) nach Anspruch 9, **dadurch gekennzeichnet, dass** die Oberflächenstruktur durch Rippen oder Leitbleche gebildet wird.

11. Medienheizer (1) nach Anspruch 9, **dadurch gekennzeichnet, dass** die Oberflächenstruktur durch eine Mikrostruktur und/oder durch einen Sintermaterialblock aus Metall oder Keramik, ein offenporiges Kunststoffteil, ein Graphitelement mit Durchgangskanälen, einen Metallschaum, eine Metallwolle, oder ein gut wärmeleitendes Material mit Kanälen oder ähnliches gebildet wird.

12. Medienheizer (1) nach einem der Ansprüche 1 bis 11, **dadurch gekennzeichnet, dass** die Oberfläche des durchfließenden Volumens zumindest teilweise, vorzugsweise an der Oberfläche der Wärmequelle (2) mit einer Oberflächenbeschichtung versehen ist.

13. Medienheizer (1) nach einem der Ansprüche 1 bis 12, **dadurch gekennzeichnet, dass** sich in Durchflussrichtung der Druckluft mindestens eine Aufheizzone und mindestens eine Mischzone befindet.

14. Medienheizer (1) nach einem der vorhergehenden Ansprüche, **dadurch gekennzeichnet, dass** das Heizergehäuse und die Wärmequellen (2) im Wesentlichen einstückig, z.B. als Stranggussteil, herstellbar ist.

15. Medienheizer (1) nach einem der Ansprüche 1 bis 13, **dadurch gekennzeichnet, dass** die Wärmequellen (2) aus standardisierten Heizrohren bestehen, die im Baukastensystem in das Heizergehäuse eingebaut werden.

## Claims

1. A media heater (1) for heating up compressed air as a medium, in particular in motor vehicles or industrial applications, comprising: a housing, having an inlet (Z) for the inlet of the compressed air into the housing, an outlet (A) for the outlet of the compressed air out of the housing and walls (4a, 4b, 4c, 4d) which define a closed interior space, and one or more longitudinally formed heat sources (2) which are arranged in the interior space of the housing, wherein the walls of the housing and the heat sources (2) define a media channel in the interior space along which the compressed air to be heated up flows from the inlet (Z) to the outlet (A) during operation of the media heater (1), wherein a thermal insulation around the housing is provided which surrounds the housing completely, wherein the housing forms an outer housing (10) and an inner housing (4), **characterised in that** the two housings (4, 10) are closed with the exception of the inlet (Z) at the outer housing (10) and the outlet (A) at the inner housing (4) and the medium flows in the interior of the heater (1) between the two housings (4, 10) and at the outside of the interior housing (4) and its flow direction changes at the end of the heat sources (2) formed as heating tubes (2) and flows around the heating tubes on the way to the outlet (A).

2. The media heater (1) according to claim 1, **characterised in that** the heat source (2) is formed by an electrically heated heating tube.

3. The media heater (1) according to claim 1 or 2, **characterised in that** the heating of the heat source (2) is via PTC elements (3).

4. The media heater (1) according to one of claims 1 to 3, **characterised in that** the compressed air is guided along the heat sources (2) in a thin flow layer.

5. The media heater (1) according to one of claims 1 to 3, **characterised in that** the compressed air substantially flows transversely to the heat sources (2) .

6. The media heater (1) according to one of claims 1 to 5, **characterised in that** the compressed air substantially flows through the heater (1) in only one direction.

7. The media heater (1) according to one of claims 1 to 6, **characterised in that** a collection volume is provided at the media inlet (Z) and/or at the media outlet (A).

8. The media heater (1) according to one of claims 1 to 7, **characterised in that** the media inlet (Z) is guided over the outer surface of the heater (1) in order to take up heat loss there.

9. The media heater (1) according to one of claims 1 to 8, **characterised in that** the surface of the volume flowing through is provided at least in part, preferably on the surface of the heat source (2), with surface structures in order to influence the flow behaviour.

10. The media heater (1) according to claim 9, **characterised in that** the surface structure is formed by ribs or guide plates.

11. The media heater (1) according to claim 9, **characterised in that** the surface structure is formed by a micro structure and/or by a sinter material block from metal or ceramics, an open-pored plastic part, a graphite element with through channels, a metal foam, a metal wool or a highly heat-conductive material with channels or the like.

12. The media heater (1) according to one of claims 1 to 11, **characterised in that** the surface of the volume flowing through is provided at least in part, preferably on the surface of the heat source (2), with a surface coating.

13. The media heater (1) according to one of claims 1 to 12, **characterised in that** there is at least one heating zone and at least one mixing zone in the throughflow direction of the compressed air.

14. The media heater (1) according to one of the preceding claims, **characterised in that** the heater housing and the heat sources (2) can be produced substantially in one piece, e.g. as a strand casting part.

15. The media heater (1) according to one of claims 1 to 13, **characterised in that** the heat sources (2) consist of standardised heating tubes which are integrated into the heater housing according to the building block principle.

## Revendications

1. Dispositif de chauffage de milieux (1), dispositif qui sert au chauffage d'air comprimé utilisé comme milieu, en particulier dans des véhicules automobiles ou dans des applications industrielles, ledit dispositif comprenant : un carter qui présente une arrivée (Z) pour l'entrée de l'air comprimé pénétrant dans le carter, une évacuation (A) pour la sortie de l'air comprimé s'échappant du carter, et comprenant des parois (4a, 4b, 4c, 4d) qui définissent un espace intérieur fermé, et ledit carter présente une ou plusieurs source(s) de chaleur (2) configurée(s) en étant de forme allongée, lesquelles sources de chaleur sont disposées dans l'espace intérieur du carter, où les parois du carter et les sources de chaleur (2) définissent un conduit de milieux se trouvant dans l'espace intérieur, conduit de milieux le long duquel l'air comprimé à chauffer, au cours du fonctionnement du dispositif de chauffage de milieux (1), s'écoule depuis l'arrivée (Z) jusqu'à l'évacuation (A), où une isolation thermique est prévue autour du carter, laquelle isolation thermique entoure complètement le carter, où le carter forme un carter extérieur (10) et un carter intérieur (4), **caractérisé en ce que** les deux carters (4, 10) sont fermés, à l'exception de l'arrivée (Z) formée sur le carter extérieur (10) et de l'évacuation (A) formée sur le carter intérieur (4), et **en ce que** le milieu circule à l'intérieur du dispositif de chauffage (1), entre les deux carters (4, 10) et sur le côté extérieur du carter intérieur (4), et **en ce que** ledit milieu inverse sa direction d'écoulement au niveau de l'extrémité des sources de chaleur (2) configurées comme des tubes chauffants (2) et **en ce qu'**il baigne les tubes chauffants sur le trajet menant à l'évacuation (A).

2. Dispositif de chauffage de milieux (1) selon la revendication 1, **caractérisé en ce que** la source de chaleur (2) est formée par un tube chauffant chauffé électriquement.

3. Dispositif de chauffage de milieux (1) selon la revendication 1 ou 2, **caractérisé en ce que** le chauffage de la source de chaleur (2) se produit grâce à des éléments (3) à coefficient de température positif - CTP.

4. Dispositif de chauffage de milieux (1) selon l'une quelconque des revendications 1 à 3, **caractérisé en ce que** l'air comprimé est dirigé dans une fine couche d'écoulement située le long des sources de chaleur (2).

5. Dispositif de chauffage de milieux (1) selon l'une quelconque des revendications 1 à 3, **caractérisé en ce que** l'air comprimé s'écoule pratiquement de façon transversale par rapport aux sources de chaleur (2).

6. Dispositif de chauffage de milieux (1) selon l'une quelconque des revendications 1 à 5, **caractérisé en ce que** l'air comprimé s'écoule à travers le dispositif de chauffage (1), pratiquement seulement dans une direction.

7. Dispositif de chauffage de milieux (1) selon l'une quelconque des revendications 1 à 6, **caractérisé en ce qu'il** est prévu un volume collecteur se formant au niveau de l'entrée (Z) des milieux et / ou au niveau de l'évacuation (A) des milieux.

8. Dispositif de chauffage de milieux (1) selon l'une quelconque des revendications 1 à 7, **caractérisé en ce que** l'entrée (Z) des milieux est dirigée en passant par la surface extérieure du dispositif de chauffage (1), pour y absorber de la chaleur dissipée.

9. Dispositif de chauffage de milieux (1) selon l'une quelconque des revendications 1 à 8, **caractérisé en ce que** la surface du volume en circulation est dotée, au moins en partie, de préférence sur la surface de la source de chaleur (2), de structures de surface, afin d'influencer les propriétés d'écoulement.

10. Dispositif de chauffage de milieux (1) selon la revendication 9, **caractérisé en ce que** la structure de surface est formée par des ailettes ou par des tôles déflectrices.

11. Dispositif de chauffage de milieux (1) selon la revendication 9, **caractérisé en ce que** la structure de surface est formée par une microstructure et / ou par un bloc de matériau fritté se composant de métal ou de céramique, formée par une partie en matière plastique à pores ouverts, par un élément en graphite comportant des conduits de passage, par une mousse de métal, par une laine de métal, ou bien formée par un matériau bon conducteur de la chaleur et comportant des conduits ou d'autres éléments similaires.

12. Dispositif de chauffage de milieux (1) selon l'une quelconque des revendications 1 à 11, **caractérisé en ce que** la surface du volume en circulation est dotée, au moins en partie, de préférence sur la surface de la source de chaleur (2), d'un revêtement de surface.

13. Dispositif de chauffage de milieux (1) selon l'une quelconque des revendications 1 à 12, **caractérisé en ce qu'au** moins une zone de chauffage et au moins une zone de mélange se trouvent dans la direction de circulation de l'air comprimé.

14. Dispositif de chauffage de milieux (1) selon l'une quelconque des revendications précédentes, **caractérisé en ce que** le carter du dispositif de chauffage et les sources de chaleur (2) peuvent être fabriqués pratiquement de façon monobloc, par exemple comme une pièce obtenue par coulée continue.

15. Dispositif de chauffage de milieux (1) selon l'une quelconque des revendications 1 à 13, **caractérisé en ce que** les sources de chaleur (2) se composent de tubes chauffants standardisés qui, dans le système modulaire, sont intégrés dans le carter du dispositif de chauffage.
